**Europäisches Patentamt**

**European Patent Office**

**Office européen des brevets**

(19)

(11) Publication number : **0 454 296 B1**

(12)

# EUROPEAN PATENT SPECIFICATION

(45) Date of publication of patent specification :
**31.05.95 Bulletin 95/22**

(51) Int. Cl.⁶ : **G11B 5/72, G11B 5/64**

(21) Application number : **91302088.9**

(22) Date of filing : **13.03.91**

(54) **Magnetic recording medium.**

(30) Priority : **26.04.90 JP 113881/90**

(43) Date of publication of application :
**30.10.91 Bulletin 91/44**

(45) Publication of the grant of the patent :
**31.05.95 Bulletin 95/22**

(84) Designated Contracting States :
**DE FR GB**

(56) References cited :
**EP-A- 0 221 309**
**EP-A- 0 230 911**
**EP-A- 0 264 699**
**US-A- 4 833 031**

(73) Proprietor : **MATSUSHITA ELECTRIC
INDUSTRIAL CO., LTD.
1006, Oaza Kadoma
Kadoma-shi, Osaka-fu, 571 (JP)**

(72) Inventor : **Murai, Mikio**
**2-10-32, Tsudahigashimachi
Hirakata-shi, Osaka-fu 573-01 (JP)**
Inventor : **Takahashi, Kiyoshi**
**2-1-14, Ayukawa
Ibaraki-shi, Osaka-fu 567 (JP)**
Inventor : **Odagira, Masaru**
**2-2-46, Seiwadainish
Kawanishi-shi, Hyogo-ken 666-01 (JP)**

(74) Representative : **Crawford, Andrew Birkby et al
A.A. THORNTON & CO.
Northumberland House
303-306 High Holborn
London WC1V 7LE (GB)**

## Description

This invention relates to a magnetic recording medium with a ferromagnetic metal thin film, as a magnetic recording layer, coated with a hard protective film.

Many methods have been previously attempted in order to improve the corrosion resistance, still durability and running durability of magnetic recording media having a ferromagnetic metal thin film as the magnetic recording layer. For instance, one method is to provide a carboxylic acid or phospholic acid system lubricant layer on the ferromagnetic metal thin layer, another method is to provide a non-magnetic metal film on the ferromagnetic metal thin film as a protective layer, and still another method is to provide a $SiO_2$ film on the ferromagnetic metal thin film as a protective layer. However, the present situation is that such protective layers as provided as shown above cannot improve the still durability and corrosion resistance of magnetic recording media satisfactorily to the level that is required.

Recently, as disclosed, for example, in U.S. Patents 4,717,622 and 4,833,031, a diamond like carbon film has been examined to use as a protective film for a thin film type magnetic recording medium. As a result, the still durability can be considerably improved, however, in the case that a hard protective film is formed on the surface thereof, if the ratio of the maximum surface roughness (Rmax) to the average surface roughness (Ra), or (Rmax/Ra), is as large as more than 3.0, it is recognized that the output reduction of -4.0 to -6.0 dB is occurred due to tape running. This is confirmed because the amorphous part of a MIG head is more selectively worn than the ferrite part thereof. In addition, due to the large protrusions, in spite of the formation of a hard protective film, the still durability of a magnetic recording medium cannot be improved so much.

An object of this invention is to provide a metal thin film type magnetic recording medium in which a diamond like carbon film or a hard film of SiC or TiC, or $Si_3N_4$, BN or the like with a Vickers hardness value of 1500 to 7000 is formed on the surface of the metal thin film type magnetic recording medium as a protective layer so that the output reduction due to tape running can be eliminated and at the same time, the still durability of the medium can be outstandingly improved.

According to the invention, there is provided a magnetic recording medium of a metal thin film type comprising:

a non-magnetic substrate;

a ferromagnetic metal thin film formed on said non-magnetic substrate;

a plasma polymerized film formed on said ferromagnetic metal thin film;

a hard protective film having a micro-Vickers hardness value ranging from 1500 to 7000 and a thickness ranging from 50 to 300Å formed on said plasma polymerized film; and

a lubricant layer formed on said hard protective film,

characterized in that a ratio (Rmax/Ra) of maximum surface roughness (Rmax) and average surface roughness (Ra) of said metal thin film type magnetic recording medium ranges from 1.0 to 3.0.

In order to attain the above-mentioned object, according to a preferred embodiment of this invention, an optically flat base film is coated with particles of particle size of 100Å with a suitable quantity of binder so as to prevent aggregation thereby to form a protrusion layer forming a base film surface having the ratio (Rmax/Ra) of the maximum surface roughness (Rmax) to the average surface roughness (Ra) ranging from 1.0 to 3.0, preferably from 1.0 to 2.0. On the surface thus prepared is formed a ferromagnetic metal thin film, and a plasma polymerized film of hydrocarbon or hydrocarbon containing fluorine is formed on the ferromagnetic metal thin film. On the plasma polymerized film, a hard protective film is formed up to a thickness of 50 to 300 Å and a lubricant layer is formed on the hard protective film as a top-coat layer. As the hard protective film, diamond like carbon, carbide such as SiC, TiC or the like, or nitride such as $Si_3N_4$, BN or the like can be used.

Means of solving the problem on the output reduction due to tape running will be concretely explained below.

With a conventional metal thin film type magnetic recording medium without having the maximum surface roughness controlled, the ratio of Rmax to Ra, or (Rmax/Ra), is as large as 4.0 to 10.0 in general. In this case, if the micro-Vickers hardness value of the protective film of the surface thereof is less than 1000 on an approximate basis, when a virgin two-hour length tape medium is used to be recorded and reproduced by a MIG head-equipped video tape recorder (VTR), there is almost no difference between a reproduced output after recording for ten seconds and a reproduced output after recording for two hours, obtaining a difference below -1.0 dB when the output after ten-second recording is taken as a reference value. As shown above, there is no problem on the output reduction due to tape running, however, because the Vickers hardness of the protective film is low, the still durability is not so much improved from the case that a lubricant is coated only on the surface of a cobalt oxide film.

This is considered due to the fact that with the conventional metal thin film type magnetic recording medium, the Vickers hardness value of the protective film formed beneath the lubricant layer is as small as from 600 to 1000, so that the surface of the largest protrusions is rapidly worn and fractured by the rapidly rotating MIG head in which sendust or amorphous material is used and the load applying system to the medium will be immediately changed to the system that the load is supported by all protrusions, which means that the load per protrusion becomes small and a shearing force exceeding the elastic limit of the sendust or amorphous material used in the head cannot be acted thereon.

Considered from the viewpoint of the tape running, the head runs on the surface of the medium only two times, recording and reproducing, but considered from the viewpoint of the still durability, the head runs on the same place as large as thirty times per second, so that the wear and fracture of the largest protrusion largely serve to act as a trigger to form scars on the thin film medium, resulting in shortening the still life. On the other hand, if a diamond like carbon film with the Vickers hardness value of 3000 is provided thereon while keeping the (Rmax/Ra) value in the general condition, namely, ranging from 4.0 to 10.0, the still durability can be improved from four to five times compared with the case when a lubricant film is provided on the surface of a cobalt oxide film or the surface of a protective film having the Vickers hardness value less than 1000. However, the tape running-caused output reduction of the reproducing output after two-hour recording to the reproducing output after ten-second recording as shown above, which is defined as the output reduction due to tape running, ranges from -4.0 to -6.0 dB. This is confirmed due to the fact that the metallic part such as the sendust or amorphous part of the MIG head is more rapidly worn than the ferrite part thereby to form a step on the head itself. In addition, the largest protrusions of the surface of the medium is difficult to be worn and fractured even when the head is rotating at a higher speed by increasing the Vickers hardness of the protective film formed beneath the lubricant film of a metal thin film type medium to a value as high as 3000, so that the load applied to the medium is supported by the largest protrusions only. As a result, the load acted on one protrusion which is in a real contact is increased, and a shearing force exceeding the elastic limit of the metallic part such as the sendust or amorphous part is considered to be acted thereon. As the result of giving a damage to the MIG head, the wear and fracture of the surface of the thin film recording medium can be almost completely eliminated, leading to the improvement of the still durability about four to five times compared with conventional ones.

According to this invention, the top surface of a magnetic recording medium is protected by providing a lubricant film to absorb almost amount of the shearing force, and a protective film having higher Vickers hardness value is provided to resist the residual shearing force and by designing the (Rmax/Ra) value so as to range from 1.0 to 3.0, preferably from 1.0 to 2.0, the load acted on the largest protrusions can be dispersed. Accordingly, this invention makes it possible to provide a highly reliable metal thin film type magnetic recording medium whose still life can be improved from two to three times as compared with that of a conventional one with a protective film whose maximum surface roughness is not controlled and whose output reduction caused by the step of the MIG head formed due to tape running can be eliminated.

In addition, as the method of controlling the value of (Rmax/Ra) so as to range from 1.0 to 3.0, preferably from 1.0 to 2.0, the case of forming this surface when the protrusion layer is to be formed is described as an example, but, for example, a diamond like carbon film is formed, then only large protrusions are removed by polishing with a cleaning tape, and finally, the value of (Rmax/Ra) can be controlled so as to range from 1.0 to 3.0, preferably from 1.0 to 2.0.

Fig. 1 is a schematic cross-sectional view of a metal thin film type magnetic tape medium according to one embodiment of this invention.

Fig. 2 is a graph showing a relation of the maximum surface roughness and hardness of a protective film and the still life of the magnetic tape medium shown in Fig. 1.

Fig. 3 is a graph showing a relation of the maximum surface roughness and hardness of a protective film and the output reduction due to tape running of the tape medium shown in Fig. 1.

Fig. 4 shows a result of measuring a surface roughness of Sample No. 6 by the stylus contact method.

Fig. 5 shows a result of measuring a surface roughness of Sample No. 9 by the stylus contact method.

Fig. 6 shows a result of measuring a surface roughness of Sample No. 3 by the stylus contact method.

Fig. 7 shows a relation of the thickness of a silicon carbide protective film, and the still life and output of a metal thin film type magnetic recording medium.

Fig. 8 shows a relation of the hardness of a diamond like carbon film formed on a metal thin film type magnetic tape and the still life of this magnetic tape.

Fig. 9 exemplifies recesses generated at the amorphous part of a combination type MIG head when Sample No. 8 is tested.

A magnetic recording medium according to one embodiment of this invention will be described below while referring to the drawings attached.

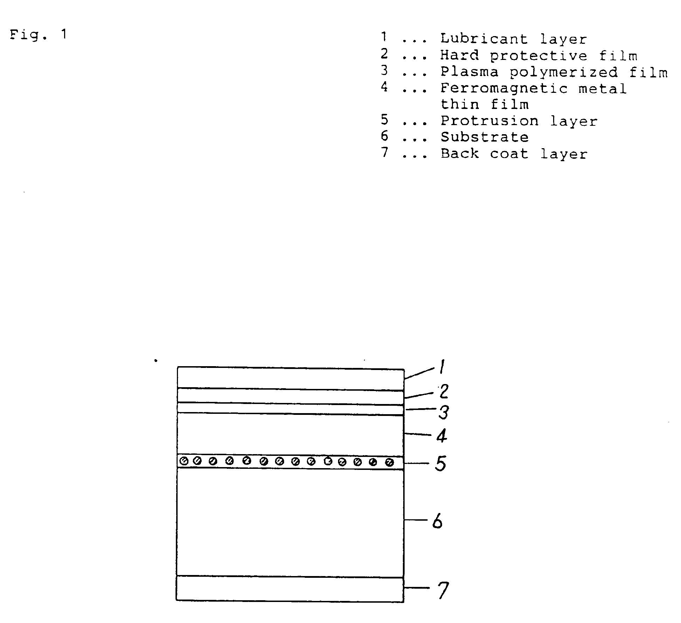

In Fig. 1, the reference numeral 1 indicates a fluorine contained lubricant layer which is made by coating

EP 0 454 296 B1

a fluorine contained carboxylic acid or a fluorine contained carboxylic acid ester up to a thickness of 50 Å. For this purpose, for example, $C_5F_{11}(CH_2)_{10}COOH$, $C_6H_5CH_2CH = CH(CH_2)_{14}COOH$ or $C_5F_{11}(CH_2)_{10}COOC_8H_{17}$ can be used, resulting in a reduction in friction coefficient.

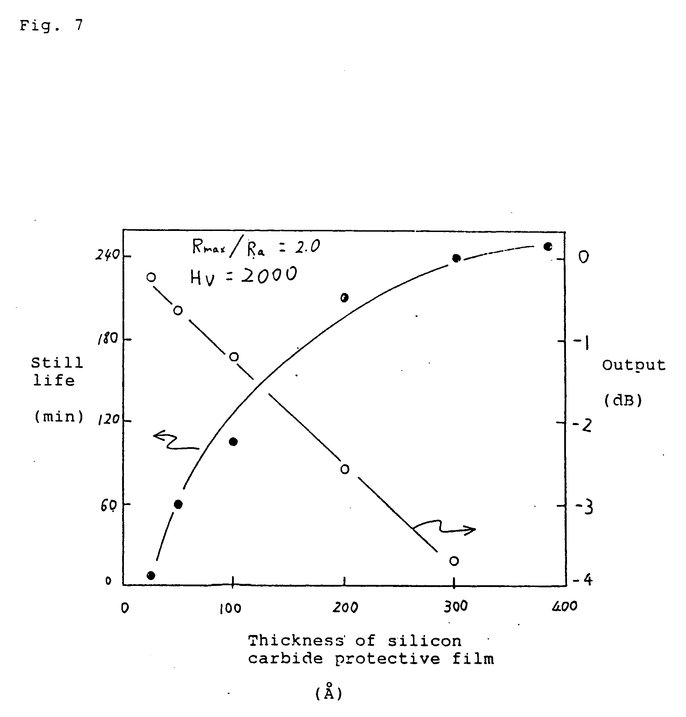

The reference numeral 2 indicates a hard protective film for which a diamond like carbon, or SiC or TiC, or $Si_3N_4$, BN or the like having a Vickers hardness value of 1500 to 7000 can be used. The thickness of the protective film thus formed ranges from 50 to 300 Å, preferably from 100 to 200 Å. If it is too thin, the still durability is reduced and on the other hand, if too thick, a disadvantage can be pointed out from the viewpoint of output aspect. The relation between them is shown in Fig. 7 with a silicon carbide protective film as an example.

The reference numeral 3 indicates a plasma polymerized film with hydrocarbon as a raw material. The thickness thereof ranges from 5 to 20 Å. If the thickness is out of this range, then the still durability will be reduced. This film serves to prevent a metal thin film from being sputtered when the hard protective film 2 is formed by the plasma CVD technique thereby to bind an oxide layer of the surface of the metal thin film suitably with the hard protective film 2. It is essentially important in this case that it is remained up to a thickness of 5 to 20 Å after sputtering the hard protective film 2.

The reference numeral 4 indicates a ferromagnetic metal thin film. For this, Co-Ni-O, Co-O, Co-Cr or the other system material can be used. The thickness thereof is about 1800 Å in general.

The reference numeral 5 indicates a protrusion layer formed on a substrate 6. The particle size thereof ranges from 100 to 500 Å and the density is $10^5$ to $10^9$ particles per $mm^2$. Considered on a material basis, $SiO_2$, $TiO_2$ or the like is generally used and it is essentially important to uniformalize the height of protrusions. For this, a protrusion layer having a uniform protrusion height is formed at the initial stage, or after forming as a magnetic tape, a uniform surface is formed by polishing with a cleaning tape.

The reference numeral 6 indicates a non-magnetic substrate for which polyethylene terephthalate, polyethylene naphthalate, polyimide or the like, or aluminum or glass can be used. In this case, however, it is required that the surface on the magnetic side of the substrate 6 is uniformalized up to a level of surface roughness of about 10 Å.

The reference numeral 7 indicates a back coat which has a thickness of 0.5 μm and the maximum surface roughness of 0.2 μm. On a material basis, urethane, nitrocellulose or polyester can be used as a binder and carbon or calcium carbonate can be used as a filler.

Further detailed description will be made below while showing examples including manufacturing conditions.

On optically flat polyethylene terephthalate films 6 of 500 mm width, well-dispersed silica particles with a particle size of 100 Å were coated with a suitable quantity of a binder respectively to form a protrusion layer 5 whose surface has a ratio (Rmax/Ra) of the maximum surface roughness (Rmax) and the average surface roughness (Ra) of 1.5 and a protrusion layer 5 whose (Rmax/Ra) value ranges from 3.0 to 4.0. The density of each conical protrusion layer was $10^5$ to $10^9$ particles per $mm^2$ and the Ra values of the protrusion layers 5 at the stage before a magnetic film is provided were about 70 Å and 100 Å, respectively, on the basis of STM analysis. A ferromagnetic thin film 4 of Co(80) - Ni(20) system was formed on each of the protrusion layers 5 while introducing oxygen by the tilted vacuum evaporation technique. At this stage, the Ra value of the protrusion layers 5 were changed respectively to 150 Å and 220 Å on the basis of STM analysis. This is because of shadowing by the tilted evaporation. On the ferromagnetic metal thin film 4, a plasma polymerized film 3 with a thickness of 20 Å was formed using isooctane as a raw material under conditions of the discharge tube such as a vacuum degree of 0.1 torr, a frequency of 15 KHz and an output voltage of 500 V. The flow rate of the raw material ranged from 20 to 100 sccM. On the plasma polymerized film 3, a diamond like carbon film 2 with a thickness of 150 Å was formed using a mixture of propane and argon as a raw material by the plasma CVD technique under conditions of the discharge tube such as a vacuum degree of 0.3 Torr, an AC voltage of 2000 V and a DC voltage of +800 V. The flow rate of the gas mixture ranged from 80 to 300 sccM. In addition, a silicon carbide film 2 was formed on the plasma polymerized film 3 with a mixture of $SiH_4$, $H_2$ and $CH_4$ as a raw material under the same conditions of the discharge tube as shown above. Further in addition, a diamond like carbon film 2 and silicon carbide film 2 respectively having a thickness of 150 Å were formed on plasma polymerized films 3 respectively using the same gas and gas mixture at the same flow rates as shown above under conditions of discharge tube such as an AC voltage of 600 V and a DC voltage of +500 V.

The Vickers hardness value of each of the hard protective films 2 formed as shown above was alternatively determined by measuring the Vickers hardness of a film of 50 μm thick formed on a silicon wafer under the same conditions as in forming each of the hard protective films 2 on the micro-Vickers hardness tester manufactured by Japan Hi-tech Corporation. Thus, Vickers hardness values of 600, 2000 and 3000 were measured respectively for the diamond like carbon protective films 2, and Vickers hardness values of 600 and 2000 were measured respectively for the silicon carbide protective films 2.

On each of these protective films, a lubricant layer 1 of a fluorine contained carboxylic acid system lubri-

4

cant, $C_5F_{11}(CH_2)_{10}COOH$, was coated up to a thickness of 50 Å using a well-known coating method, and then, slittered at 8 mm width using a slitter. Thus prepared 120-minute length 8 mm metal thin film type magnetic tapes for the video use were evaluated their output reduction and still durability on 8 mm VTR with the MIG head. In this case, the output reproduced after the beginning point of a virgin tape has been recorded for ten seconds was used as the reference value and the output reproduced after the beginning point of this tape has been recorded for 120 minutes was expressed in terms of decibel (dB). The running conditions were at 23° and 70% RH. The still durability was measured by applying a tension of 20 g at 5°C and 80% RH and expressed in terms of the minute unit as the still life when the output reduction from the initial stage becomes a value of -3.0 dB.

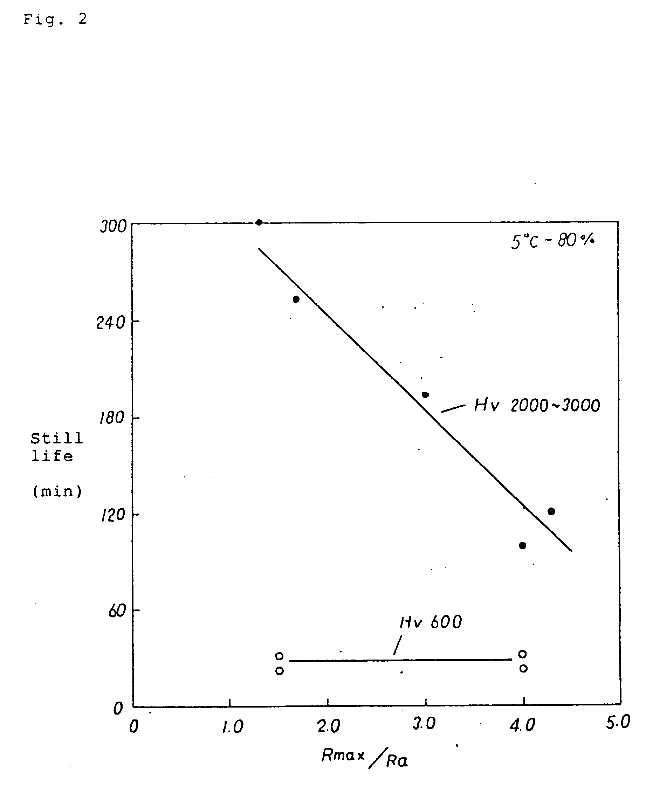

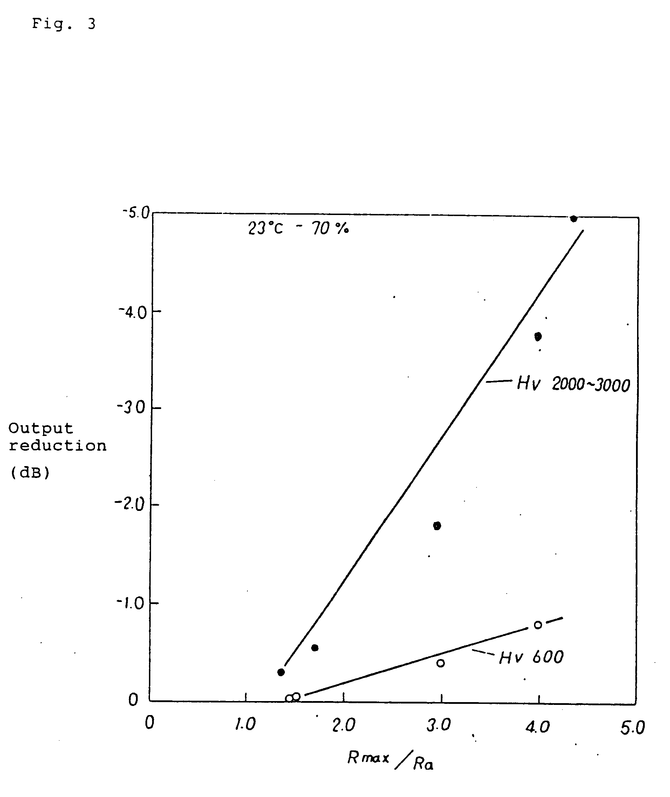

Ra and Rmax values, materials of protective film, Vickers hardness values, still lives and output reductions obtained for samples prepared by changing the making conditions are summarized in Table 1. STM analysis for determining Ra and Rmax values was achieved at a scanning distance of 100 μm in total. The still life and the output reduction characteristics summarized from Table 1 in connection with the (Rmax/Ra) values and Vickers hardness values are shown in Fig. 2 and Fig. 3, respectively.

Table 1.

| Sample No. | Average surface roughness Ra (A) | Max. surface roughness Rmax (A) | Rmax / Ra | Hard protective film material | Hv | Still life 20g(min) | Output reduction |
|---|---|---|---|---|---|---|---|
| 1 | 150 | 225 | 1.5 | C | 600 | 20 | 0 |
| 2 | 130 | 170 | 1.3 | C | 3000 | 300 | -0.3 |
| 3 | 170 | 290 | 1.7 | SiC | 2000 | 250 | -0.6 |
| 4 | 150 | 230 | 1.5 | SiC | 600 | 30 | 0 |
| 5 | 220 | 880 | 4.0 | C | 600 | 30 | -0.8 |
| 6 | 300 | 1290 | 4.3 | C | 3000 | 120 | -5.0 |
| 7 | 200 | 600 | 3.0 | SiC | 600 | 25 | -0.4 |
| 8 | 220 | 880 | 4.0 | SiC | 2000 | 100 | -3.6 |
| 9 | 150 | 450 | 3.0 | C | 2000 | 200 | -1.5 |

From the above-mentioned results, we provided a hard protective film with a micro-Vickers hardness value of 1500 to 7000 up to a thickness of 50 to 300 Å, preferably 100 to 200 Å, beneath a lubricant layer of a metal thin film type medium and designed it so that the maximum surface roughness (Rmax) is neared to the average surface roughness (Ra) as possible as we can thereby obtaining the (Rmax/Ra) value ranging from 1.0 to 3.0, preferably from 1.0 to 2.0. So designed that when the reproducing output of a virgin two-hour length tape after 10-second recording is used as the reference value, we were able to keep the reproducing output of the beginning point of the tape after two-hour recording below a reduction of -1.0 dB, and that we were able to improve the still durability ten times as high as that obtained when only a lubricant and cobalt oxide were used.

Such an improvement is for the reason that the hard protective film having the (Rmax/Ra) value controlled so as to range from 1.0 to 3.0, preferably from 1.0 to 2.0, is provided so that the real load acted on one protrusion in a real contact on the surface of the medium can be dispersed to be made small and yet the elastic limit of the shearing force acted on one protrusion of the tape medium can be made large by the hard protective film. In this case, however, such a hard protective film as made of diamond polycrystal was impossible to be used because the surface may be roughened. As a result, the upper limit of the Vickers hardness value to be usable for forming a thin film was about 7000.

In addition, the Ra value of a hard protective film of this invention used a value ranging from 70 to 250 Å on the basis of the STM analysis made after the formation of a magnetic film. If the Ra value is out of the above range, a high output characteristic constituting one of features of a thin film medium may be sacrificed. Referring to the surface roughness control, by the Ra value ranging from 10 to 50 Å the general stylus contact technique corresponds to the Ra value ranging from 70 to 250 Å by the STM analysis, which means that it is difficult to control the Ra value by the general stylus contact technique.

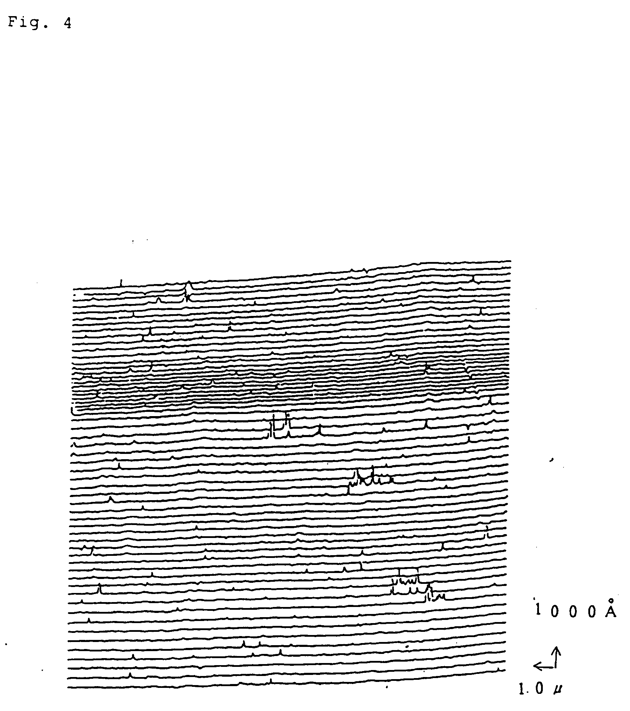

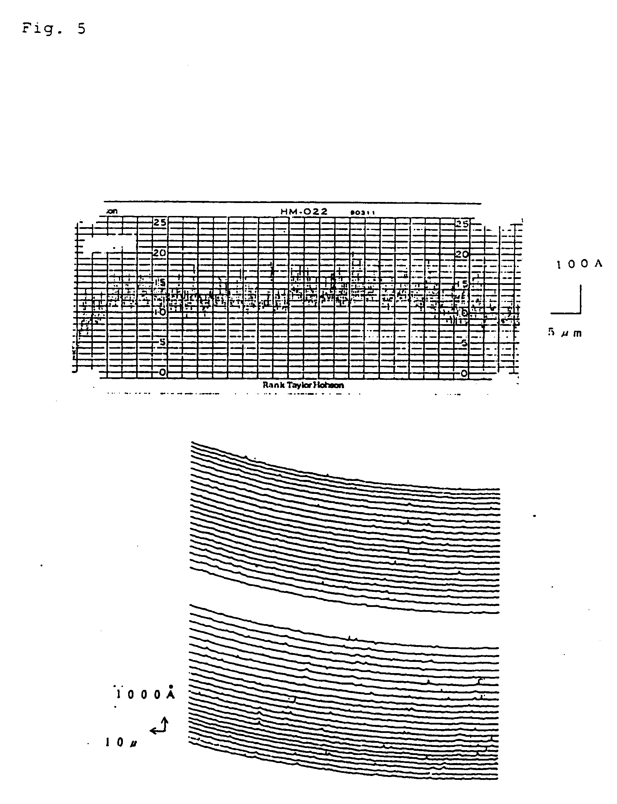

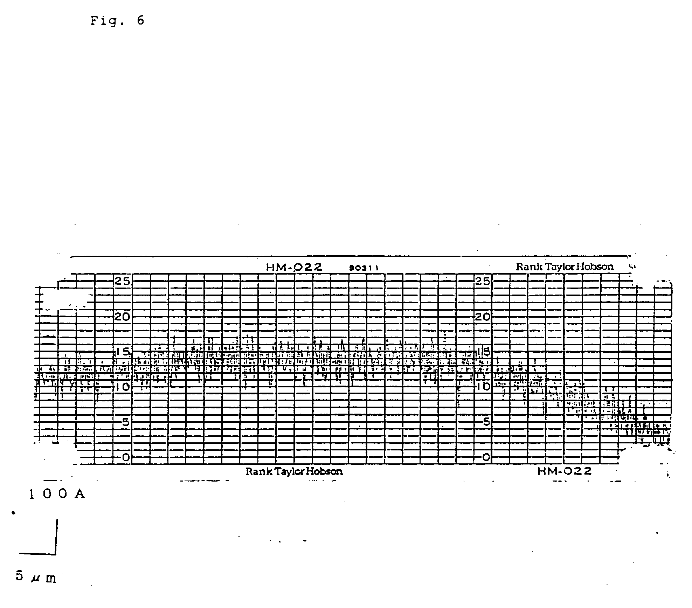

Figs. 4, 5 and 6 comparatively exemplify the results of stylus contact measurement of the surface roughnesses of samples shown in Table 1, by which the comparison of the Rmax can be made clear. In which, Fig. 4 ... Sample No. 6, Fig. 5 ... Sample No. 9, Fig. 6 ... Sample No. 3.

In this case, however, the height of each protrusion is largely different from that resulting from the STM analysis. This is because the stylus cannot be touched to the bottom of the valley of a protrusion.

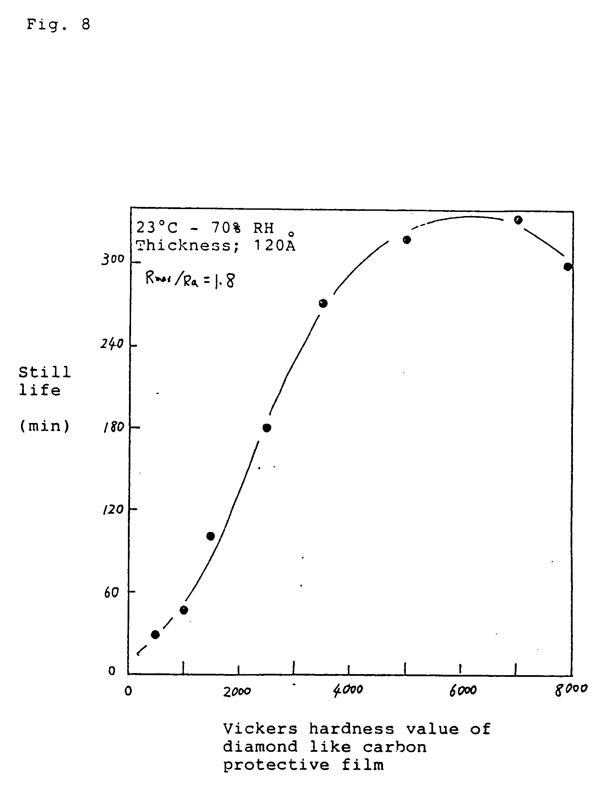

Fig. 8 shows the relation of the Vickers hardness value of a diamond like carbon protective film and the still life of a metal thin film type magnetic tape, in which when the hardness value is 7000, the still life becomes maximum. When it exceeds 7000, the surface of the protective film may be roughened, considering that the still life starts to be reduced for such reason.

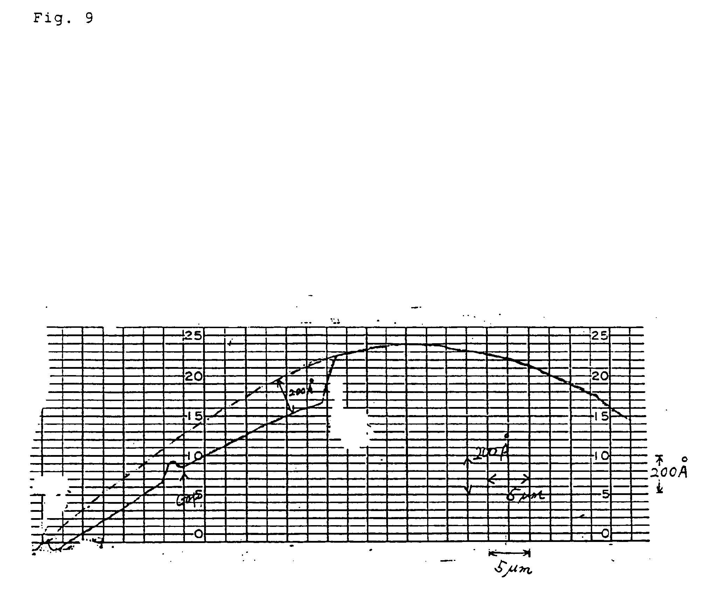

Fig. 9 exemplifies the measurement of forming recesses at the amorphous part of a MIG head by the stylus contact technique, showing that there forms a step of about 200 Å. Even under such a condition, the glass of the head gap was almost remained. As a result, this step may cause to reduce the output, resulting in occurrence of the output reduction of about 3.6 dB.

## Claims

1. A magnetic recording medium of a metal thin film type comprising:

a non-magnetic substrate;

a ferromagnetic metal thin film formed on said non-magnetic substrate;

a plasma polymerized film formed on said ferromagnetic metal thin film;

a hard protective film having a micro-Vickers hardness value ranging from 1500 to 7000 and a thickness ranging from 50 to 300Å formed on said plasma polymerized film; and

a lubricant layer formed on said hard protective film,

characterized in that a ratio (Rmax/Ra) of maximum surface roughness (Rmax) and average surface roughness (Ra) of said metal thin film type magnetic recording medium ranges from 1.0 to 3.0.

2. A magnetic recording medium as claimed in claim 1, wherein said ratio (Rmax/Ra) ranges from 1.0 to 2.0.

3. A magnetic recording medium as claimed in claim 1, wherein said hard protective film has thickness ranging from 100 to 200Å.

4. A magnetic recording medium as claimed in claim 1, wherein said plasma polymerized film has a thickness ranging from 5 to 20Å.

## Patentansprüche

1. Magnetischer Aufzeichnungsträger aus einem dünnen Metallfilm, der umfaßt:

ein nichtmagnetisches Substrat;

einen dünnen ferromagnetischen Metallfilm auf dem nichtmagnetischen Substrat;

einen auf dem dünnen ferromagnetischen Metallfilm ausgebildeten plasmapolymerisierten Film;

einen harten Schutzfilm mit einem Mikrohärtewert nach Vickers zwischen 1500 bis 7000 und einer Dicke von 50 bis 300 Å auf dem plasmapolymerisierten Film;

und eine Schmierstoffschicht auf dem harten Schutzfilm,

dadurch gekennzeichnet, daß das Verhältnis (Rmax/Ra) zwischen der maximalen Oberflächenrauheit (Rmax) und der durchschnittlichen Oberflächenrauheit (Ra) des dünnen Metallfilm-Magnetaufzeichnungsträgers zwischen 1,0 und 3,0 beträgt.

2. Magnetischer Aufzeichnungsträger nach Anspruch 1, wobei das Verhältnis (Rmax/Ra) zwischen 1,0 und 2,0 beträgt.

3. Magnetischer Aufzeichnungsträger nach Anspruch 1, wobei der harte Schutzfilm eine Dicke von 100 bis 200 Å hat.

4. Magnetischer Aufzeichnungsträger nach Anspruch 1, wobei der plasmapolymerisierte Film eine Dicke von 5 bis 20 Å aufweist.

**Revendications**

1. Support d'enregistrement magnétique du type film métallique mince comprenant :

un substrat non magnétique ;

un film métallique mince ferromagnétique formé sur ledit substrat non magnétique ;

un film polymérisé au plasma formé sur ledit film métallique mince ferromagnétique ;

un film protecteur dur ayant une valeur de microdureté Vickers allant de 1.500 à 7.000 et une épaisseur allant de 5 à 30 nm (50 à 300 Å), formé sur ledit film polymérisé au plasma ; et

une couche lubrifiante formée sur ledit film protecteur ;

caractérisé en ce que le rapport (Rmax/Ra) de la rugosité de surface maximale (Rmax) à la rugosité de surface moyenne (Ra) dudit support d'enregistrement magnétique du type à film métallique mince va de 1,0 à 3,0.

2. Support d'enregistrement magnétique selon la revendication 1, dans lequel ledit rapport (Rmax/Ra) va de 1,0 à 2,0.

3. Support d'enregistrement magnétique selon la revendication 1, dans lequel ledit film protecteur dur a une épaisseur allant de 10 à 20 nm (100 à 200 Å).

4. Support d'enregistrement magnétique, selon la revendication 1, dans lequel ledit film polymérisé au plasma a une épaisseur allant de 0,5 à 2 nm (5 à 20 Å).

Fig. 1

1 ... Lubricant layer
2 ... Hard protective film
3 ... Plasma polymerized film
4 ... Ferromagnetic metal
        thin film
5 ... Protrusion layer
6 ... Substrate
7 ... Back coat layer

Fig. 2

Fig. 3

Fig. 4

1 0 0 0 Å

1. 0 μ

Fig. 5

HM-022   90311

100 A

5 μm

Rank Taylor Hobson

1000 Å

10 μ

Fig. 6

HM-O22    90311    Rank Taylor Hobson

Rank Taylor Hobson

HM-O22

1 0 0 A

5 μ m

Fig. 7

Still
life

(min)

Output

(dB)

$R_{max}/R_a = 2.0$

$H_V = 2000$

Thickness of silicon
carbide protective film

(Å)

Fig. 8

Graph with y-axis labeled "Still life (min)" showing values 0, 60, 120, 180, 240, 300. X-axis labeled "Vickers hardness value of diamond like carbon protective film" showing values 0, 2000, 4000, 6000, 8000. Legend inside: "23°C - 70% RH, Thickness; 120Å, $R_{ms}/R_a = 1.8$"

Fig. 9